# FASCICULE DE BREVET EUROPEEN

(11) **EP 2 349 952 B1**
(45) Date de publication et mention de la délivrance du brevet: **10.12.2014**
(21) Numéro de dépôt: 09760236.1
(22) Date de dépôt: 28.10.2009
(51) Int. Cl.: C04B 38/04, C01B 3/00, C01B 6/24, H01M 8/06

(54) **PROCEDE DE PREPARATION D'UN MONOLITHE DE CARBONE ALVEOLAIRE COMPORTANT UN RESEAU POREUX HIERARCHISE**
VERFAHREN ZUR HERSTELLUNG EINES ZELLFÖRMIGEN KOHLENSTOFF-MONOLITHS MIT HIERARCHISCHEN PORENSTRUKTUR
PROCESS FOR PRODUCING A ALVEOLAR CARBON MONOLITH COMPRISING A HYERARCHICAL POROUS NETWORK

(30) Priorité: 30.10.2008 FR 0806051
(43) Date de publication de la demande: 03.08.2011
(73) Titulaire: Université Pierre et Marie Curie (Paris 6), 75005 Paris (FR)
(72) Inventeur: BACKOV, Rénal, F-33200 Bordeaux-Cauderan (FR); BRUN, Nicolas, F-33000 Bordeaux (FR); SANCHEZ, Clément, F-91440 Bure Sur Yvette (FR)
(74) Mandataire: Goulard, Sophie
(86) Numéro de dépôt international: PCT/FR2009/052085
(87) Numéro de publication internationale: WO 2010/049650

(56) Documents cités:
- EP-A- 1 394 113
- WO-A-00/21905
- US-A1- 2007 292 732
- AKIRA TAGUCHI, JAN-HENRIK SMATT, MIKA LINDEN: "Carbon Monoliths Possessing a Hierarchical, Fully Interconnected Porosity" ADVANCED MATERIALS, vol. 15, no. 14, 17 juillet 2003 (2003-07-17), pages 1209-1211, XP002569342 DOI: 10.1002/adma.200300009
- J. LEE, J. KIM, T. HYEON: "Recent Progress in the Synthesis of Porous Carbon Materials" ADVANCED MATERIALS, vol. 18, no. 16, août 2006 (2006-08), pages 2073-2094, XP002569527
- NICOLAS BRUN, GILLES PÉCASTAINGS, ODILE BABOT, MARC BIROT, ALAIN SOUM, CLÉMENT SANCHEZ, MATHIEU MORCRETTE, RENAL BACKOV: "Hard-Templating Approach Using Silica Si(HIPE) Foams to Generate Micro-Macroporous Carbonaceous Monoliths" MATERIAL RESEARCH SOCIETY SYMPOSIUM PROCEEDINGS 2009, XP002569343 Extrait de l'Internet: URL:http://www.mrs.org/s_mrs/bin.asp?CID=1 6784&DID=236223&DOC=FILE.PDF [extrait le 2010-02-18]
- NICOLAS BRUN, SAVARI PRABAHARAN, MATHIEU MOCRETTE, CLEMENT SANCHEZ, GILLES PECASTAINGS, ALAIN DERRE, ALAIN SOUM, HERVE DELEUZE: "Hard Macrocellular Silica Si(HIPE) Foams Templating Micro/Macroporous Carbonaceous Monoliths: Applications as Lithium Ion Battery Negative Electrodes and Electrochemical Capacitors" ADVANCED FUNCTIONAL MATERIALS, vol. 19, no. 19, 9 février 2009 (2009-02-09), pages 3136-3145, XP009129722
- BATALLA GARCÃA BETZAIDA ET AL: "Effect of pore morphology on the electrochemical properties of electric double layer carbon cryogel supercapacitors", JOURNAL OF APPLIED PHYSICS, AMERICAN INSTITUTE OF PHYSICS, 2 HUNTINGTON QUADRANGLE, MELVILLE, NY 11747, vol. 104, no. 1, 8 July 2008 (2008-07-08), pages 14305-14305, XP012116369, ISSN: 0021-8979, DOI: 10.1063/1.2949263

## Description

La présente invention est relative à des matériaux monolithiques macroporeux, en particulier à des monolithes de carbone et à des monolithes céramiques à structure poreuse hiérarchisée M2 (Macroporeux/Microporeux), à leur procédé de préparation, ainsi qu'à leur utilisation, notamment pour la fabrication d'épurateurs d'hydrogène, de super-condensateurs ou d'électrodes ou bien encore pour la réalisation de réactions chimiques catalysées en phase hétérogène.

Les matériaux se présentant sous la forme de monolithes de carbone poreux constituent des matériaux de choix pour de nombreuses applications telles que la purification de l'eau et de l'air, l'adsorption, la catalyse en phase hétérogène, la fabrication d'électrodes et le stockage de l'énergie en raison de leur grande surface spécifique, de leur grand volume de pores, de leur insensibilité aux réactions chimiques environnantes et de leurs excellentes propriétés mécaniques.

Ces matériaux comprennent une surface spécifique élevée et une structure hiérarchisée, c'est-à-dire une structure alvéolaire présentant généralement une double porosité. Ils présentent notamment une structure mésoporeuse dans laquelle le diamètre moyen des pores varie de l'ordre de 2 à 10 nm.

Ils peuvent être préparés selon deux grandes familles de procédés.

La première grande famille de procédés utilise des empreintes molles et correspond aux méthodes dites de « soft templating » en anglais, i.e. aux méthodes mettant en oeuvre des interactions organiques-organiques entre un polymère thermopolymérisable (précurseur de carbone généralement) et certains copolymères blocs de type polymères non ioniques tels que les produits vendus sous les dénominations commerciales Pluronic® P123 ou F 127 par la société BASF qui sont utilisés à titre d'agent modelant pour obtenir directement un matériau carboné poreux après carbonisation sous atmosphère inerte à 350°C et pyrolyse (Meng Y. et al., Angew. Chem. Int. Ed., 2005, 44, 2).

La deuxième grande famille de procédés utilise des empreintes rigides et correspond aux méthodes dites de « hard templating » ou « exotemplating » en anglais, i.e. aux méthodes dans lesquelles une empreinte solide mésoporeuse est imprégnée par une solution d'un précurseur du matériau final que l'on souhaite obtenir (précurseur de carbone par exemple) avant d'être carbonisée sous atmosphère non-oxydante.

L'invention qui va être décrite ci-après s'inscrit dans le cadre des méthodes dites de « hard templating ».

De façon plus précise, les méthodes de « hard templating » mettent en oeuvre des empreintes pouvant notamment être constituées de particules de silice mésoporeuse, de membranes d'alumine, de zéolite, etc..... Il est notamment connu, par exemple de l'article de K. P. Gierszal et al, (New Journal of Chemistry, 2008, 32, 981-993) de préparer des monolithes de carbone mésoporeux selon une méthode utilisant des matrices de silice mésoporeuse de type MCM-48 et KIT-6 ayant une structure 3D cubique. Selon ce procédé, les matrices de silice, sous forme de poudres, sont tout d'abord imprégnées par une solution d'un précurseur de carbone qui est ensuite réticulé au sein des matrices, puis les matrices sont carbonisées. Le matériau carboné est finalement obtenu après élimination de l'empreinte de silice par un traitement à l'acide. Il se présente sous la forme d'un matériau mésoporeux dont les pores ont un diamètre moyen compris entre 3 et 5 nm environ et dont le réseau poreux a une structure qui correspond sensiblement au négatif du réseau poreux de l'empreinte utilisée. Il a par ailleurs également été décrit, notamment par Alvarez S. et al. (Advanced Engineering Materials, 2004, 6(11), 897-899), la préparation de monolithes de carbone comportant un réseau macro/mésoporeux par imprégnation d'une empreinte solide de silice méso/macroporeuse par une solution d'un précurseur de carbone tel que l'alcool furfurylique qui est ensuite polymérisé au sein de l'empreinte avant que celle-ci ne soit éliminée, par exemple par un traitement acide. Les monolithes de carbone obtenus selon la méthode décrite par Alvarez S. *et al.* comportent un réseau macroporeux qui est la réplique positive du réseau macroporeux de l'empreinte de silice utilisée, ainsi qu'un réseau mésoporeux qui correspond au négatif du réseau mésoporeux de l'empreinte de silice utilisée.

Il n'existe à ce jour aucun procédé dit de « hard-templating » permettant d'accéder à des matériaux comportant un réseau poreux hiérarchisé comprenant un réseau macroporeux qui soit la réplique exacte du réseau macroporeux de l'empreinte de silice utilisée, et un réseau microporeux, tout en étant exempt de réseau mésoporeux.

Or, il est intéressant de pouvoir disposer de matériaux de ce type, dans la mesure où la présence d'un réseau macroporeux permet d'améliorer l'imprégnation d'un fluide tel qu'un réactif au sein du matériau. Il est par ailleurs intéressant de pouvoir disposer d'un matériau présentant une certaine microporosité car cela augmente la surface spécifique du matériau et améliore les réactions de confinement en phase gazeuse (permet le stockage de l'hydrogène en phase gazeuse par exemple). Par contre, la présence d'un réseau mésoporeux dans un matériau comportant en outre un réseau macroporeux n'est pas toujours souhaitable car cela aurait pour conséquence de fragiliser la texture des parois et donc d'altérer les propriétés mécaniques du matériau dans sa globalité. En outre, il a été récemment démontré que la présence d'un réseau mésoporeux n'est pas nécessaire à l'obtention de catalyseurs hétérogènes à haute performance (Ungureanu S. et al., Chem. Mater., 2008, 20, 6464-6500).

Le but de la présente invention est de fournir un procédé de préparation permettant d'accéder, à partir d'une matrice solide, à des monolithes de carbone ou de céramique poreux comportant un réseau poreux hiérarchisé comprenant des macropores dont le diamètre est égal à au moins 1 µm et des micropores interconnectés, et dans lesquels le réseau macroporeux est la réplique sensiblement exacte du réseau macroporeux de la matrice solide utilisée, lesdits monolithes ne comportant pas de réseau mésoporeux

La présente invention a pour objet un procédé de préparation d'un monolithe de carbone ou de céramique alvéolaire comportant un réseau poreux hiérarchisé comprenant des macropores et des micropores interconnectés, ledit réseau poreux étant exempt de mésopore, caractérisé en ce qu'il comprend au moins les étapes suivantes :
1) une étape de préparation d'une empreinte de silice solide sous la forme d'un monolithe alvéolaire constitué d'une matrice de silice ou de silice organiquement modifiée, ledit monolithe comprenant des macropores ayant une dimension moyenne d_{A} de 1 µm à 100 µm ; des mésopores ayant une dimension moyenne d_{E} de 2 à 50 nm et des micropores ayant une dimension moyenne d_{I} de 0,7 à 1,5 nm, lesdits pores étant interconnectés ;
2) une étape d'imprégnation, sous vide, de l'empreinte de silice solide par une solution d'au moins un précurseur de carbone ou d'au moins un précurseur de céramique choisis parmi les polymères pré-céramiques conduisant aux oxycarbonitrures, carbonitrures, nitrures ou boronitrures de carbone ;
3) une étape de polymérisation et/ou de réticulation dudit précurseur au sein de l'empreinte de silice solide ;
4) une étape de carbonisation de l'empreinte de silice solide renfermant ledit précurseur polymérisé et/ou réticulé ;
5) l'obtention dudit monolithe de carbone ou de céramique par élimination de l'empreinte de silice solide par traitement avec un acide ou une base, ledit traitement étant effectué indifféremment avant ou après ladite étape de carbonisation ;
et en ce que, lors de la première étape, la préparation de l'empreinte de silice est réalisée selon un procédé consistant à :
- préparer une émulsion en introduisant une phase huileuse dans une solution aqueuse de tensioactif,
- à ajouter une solution aqueuse d'au moins un précurseur d'oxyde de silice et/ou d'au moins un précurseur d'oxyde de silice organiquement modifié à la solution de tensioactif, avant ou après la préparation de l'émulsion,
- à laisser le mélange réactionnel au repos jusqu'à la condensation dudit précurseur, puis
- à sécher le mélange pour obtenir l'empreinte de silice solide attendue, et
- lorsque l'empreinte de silice est préparée à partir d'une solution aqueuse d'au moins un précurseur d'oxyde de silice (non organiquement modifié), alors ledit procédé comprend en outre une étape supplémentaire consistant à traiter thermiquement l'empreinte de silice solide à une température d'au moins 650°C (étape de frittage permettant de souder les particules de silice pour augmenter les propriétés mécaniques de l'empreinte).

Au sens de la présente invention, on entend par réseau mésoporeux, un réseau comportant des mésopores, c'est-à-dire des pores dont la taille varie de 2 à 50 nm.

Les inventeurs ont en effet constaté que l'utilisation d'une empreinte de silice solide comportant une triple porosité comme définie ci-dessus, permet d'obtenir, non pas un monolithe de carbone ou de céramique dont le réseau macroporeux correspond au négatif du réseau macroporeux de l'empreinte utilisée (sphères pleines de carbone ou de céramique accolées les unes aux autres), ni à un monolithe macro/mésoporeux dont le réseau macroporeux est la réplique du réseau macroporeux de l'empreinte utilisée et le réseau mésoporeux correspond au négatif du réseau mésoporeux de l'empreinte utilisée, mais à l'obtention d'un monolithe de carbone ou de céramique comportant, de façon très surprenante, un réseau poreux homogène et hiérarchisé M2 dans lequel le réseau macroporeux est constitué de sphères creuses de carbone ou de céramique accolées les unes aux autres qui est la réplique sensiblement exacte du réseau macroporeux de l'empreinte de silice utilisée, et dont les parois sont microporeuses. De plus, le monolithe ainsi obtenu est exempt de mésoporosité.

Au sein de tels matériaux, l'épaisseur des parois des macropores (jonctions internes) est particulièrement homogène.

L'homogénéité de l'imprégnation, ainsi que les excellentes propriétés mécaniques des matériaux obtenus attestent du caractère inattendu de ce résultat : en effet, lorsque l'on utilise une empreinte de silice se présentant sous la forme d'un matériau macroporeux, la quasi absence de forces de capillarité et le confinement (le mouillage du précurseur de carbone ou de céramique avec l'interface silicique) ne sont pas des caractéristiques pouvant générer, *a priori* :
- un bon recouvrement des macropores de l'empreinte de silice, ceci étant d'autant plus vrai sur plusieurs millimètres (de l'extérieur vers l'intérieur du monolithe) ;
- et donc une macroporosité ouverte.

Au sens de la présente invention, on entend par monolithe, un objet solide ayant une dimension moyenne d'au moins 1 mm.

Le ou les précurseur(s) d'oxyde de silice ou d'oxyde de silice organiquement modifié utilisés lors de la première étape de préparation de l'empreinte de silice peuvent être choisis parmi les tetralcoxydes de silice de formule (I) suivante :

R'ₙ(OR)₄₋ₙSi (I)

dans laquelle :
- R représente un radical alkyle ayant de 1 à 5 atomes de carbone ou un groupement de formule (II) suivante :

   -(CH₂)ₘ-R₁ (II)

   dans laquelle 0≤m≤5, et R₁ est choisi parmi un groupe thiol, un groupe pyrrole, un groupe amino qui porte éventuellement un ou plusieurs substituants alkyle, alkylamino ou aryle éventuellement substitué, un groupe alkyle (ayant de préférence de 1 à 5 atomes de carbone), ou un groupe phényle qui porte éventuellement un substituant R₂ de type alkyle, notamment un groupe méthyle,
- R' représente un radical alkyle ayant de 1 à 5 atomes de carbone ou un radical aryle qui portent éventuellement un ou plusieurs groupes fonctionnels, et
- 0 ≤ n < m ; m étant la valence de l'atome de silicium.

Dans un mode de réalisation, le précurseur de formule (I) comporte un seul type de groupement de formule (II). Dans un autre mode de réalisation, le précurseur de formule (I) comporte au moins deux types différents de groupements de formule (II).

En particulier, le groupement organique de formule (II) peut être :
- un groupement 3-mercaptopropyle ;
- un groupement 3-aminopropyle ;
- un groupement N-(3-propyl) pyrrole ;
- un groupement N-(2-aminoéthyl)-3-aminopropyle ;
- un groupement 3-(2,4 dinitrophénylamino) propyle ;
- un groupement phényle ou benzyle ; ou
- un groupement méthyle.

Selon un mode de réalisation préféré de l'invention, le ou les précurseur(s) de formule (I) sont choisis parmi le tetraméthoxysilane, le tetraéthoxyorthosilane (TEOS), le (3-mercaptopropyl)triméthoxysilane, le (3-aminopropyl)-triéthoxysilane, le N-(3-triméthoxysilylpropyl)pyrrole, le 3-(2,4-dinitrophénylamino)propyltriéthoxysilane, le N-(2-aminoéthyl)-3-aminopropyltriméthoxysilane, le phényltriéthoxysilane et le méthyltriéthoxysilane.

L'utilisation d'un précurseur de formule (I) comportant au moins un groupement de formule (II), permet d'obtenir une empreinte de silice dans laquelle le mouillage par la solution de précurseurs de carbone ou de céramique est amélioré. Cela permet également d'optimiser l'imprégnation de la porosité avec des monomères polymérisables ou des macromonomères qui donneront naissance au carbone et à des céramiques diverses.

L'utilisation d'un précurseur de formule (I) comportant au moins un groupement de formule (II) complexant tel que par exemple un groupement 3-mercaptopropyle, 3-aminopropyle, N-(3-propyl) pyrrole, N-(2-aminoéthyl)-3-aminopropyle ou 3-(2,4 dinitrophénylamino) propyle permet en outre de piéger des métaux variés en fonction de la nature de groupement de formule (II). Dans ce cas, le procédé conforme à l'invention comprend alors en outre, avant l'étape 2), une étape intermédiaire au cours de laquelle l'empreinte de silice est imprégnée par une solution d'au moins un sel métallique. Lors de cette imprégnation, soit le sel métallique est complexé en l'état par le groupement de formule (II), soit le cation du sel métallique est complexé sous forme réduite. Dans ce cas, la réduction du cation métallique peut être provoquée soit par imprégnation subséquente de l'empreinte de silice par une solution d'un agent réducteur tel que par exemple le borohydrure de sodium, soit par radiolyse, c'est-à-dire par irradiation de l'empreinte de silice par des rayons gamma. Le monolithe de carbone ou de céramique finalement obtenu intégrera ainsi dans sa structure le ou les métaux utilisés.

La concentration en précurseur(s) d'oxyde de silice et/ou en précurseurs d'oxyde de silice organiquement modifié au sein de la solution aqueuse est, de préférence, supérieure à 10 % en masse par rapport à la masse de la phase aqueuse. Cette concentration varie plus préférentiellement de 17 à 35 % en masse par rapport à la masse de la phase aqueuse.

La phase huileuse est de préférence constituée par un ou plusieurs composés choisis parmi les alcanes linéaires ou ramifiés ayant au moins 12 atomes de carbone. A titre d'exemple, on peut citer le dodécane et l'hexadécane. La phase huileuse peut en outre être constituée par une huile de silicone de faible viscosité, c'est-à-dire inférieure à 400 centipoise.

La quantité de phase huileuse présente au sein de l'émulsion peut être ajustée en fonction du diamètre des macropores que l'on souhaite obtenir pour l'empreinte de silice, étant entendu que plus la fraction volumique huile/eau sera élevée, plus le diamètre des gouttelettes d'huile au sein de l'émulsion sera faible et plus le diamètre des macropores sera faible également.

De manière générale, la phase huileuse représente de 60 à 90 % en volume par rapport au volume total de l'émulsion. Cette quantité d'huile permet d'obtenir une empreinte de silice dans laquelle le diamètre moyen des macropores varie de 1 à 100 µm environ.

Le composé tensioactif peut être un tensioactif cationique choisi notamment parmi le bromure de tetradécyltriméthylammonium (TTAB), le bromure de dodécyltriméthylammonium ou le bromure de cétyl-triméthylammonium. Lorsque le composé tensioactif est cationique, le milieu réactionnel est porté à un pH inférieur à 3, de préférence inférieur à 1. Le bromure de tetradécyltriméthylammonium est particulièrement préféré.

Le composé tensioactif peut en outre être un tensioactif anionique choisi parmi le dodécylsulfate de sodium, le dodécylsulfonate de sodium et le dioctylsulfosuccinate de sodium (AOT). Lorsque le composé tensioactif est anionique, le milieu réactionnel est porté à un pH supérieur à 10.

Le composé tensioactif peut enfin être un tensioactif non ionique choisi parmi les tensioactifs à tête éthoxylée, et les nonylphénols. Parmi de tels tensioactifs, on peut en particulier citer les copolymères blocs d'éthylèneglycol et de propylèneglycol vendus par exemple sous les dénominations commerciales Pluronic® P123 et Pluronic® F 127 par la société BASF. Lorsque le composé tensioactif est non ionique, le milieu réactionnel est porté à un pH supérieur à 10 ou inférieur à 3, de préférence inférieur à 1 et contient en outre, de préférence, du fluorure de sodium afin d'améliorer la condensation des précurseurs de l'oxyde de silice.

La quantité totale de tensioactif présente au sein de l'émulsion peut également être ajustée en fonction du diamètre des macropores que l'on souhaite obtenir dans l'empreinte de silice. Cette quantité est également variable en fonction la nature du tensioactif utilisé.

De manière générale, la quantité de tensioactif varie de 1 à 10 % en masse, de préférence de 3 à 6 % en masse, par rapport à la masse totale de l'émulsion.

L'étape de condensation du ou des précurseur(s) d'oxyde de silice et/ou du ou des précurseur(s) d'oxyde de silice organiquement modifié est effectuée avantageusement à une température proche de la température ambiante. La durée de cette étape peut varier de quelques heures (2 à 3 heures) à quelques semaines (2 à 3 semaines) en fonction du pH du milieu réactionnel.

Selon une forme de réalisation préférée de l'invention, l'empreinte de silice obtenue à la fin de la première étape est lavée à l'aide d'un solvant organique (tel que par exemple le tetrahydrofurane, l'acétone et leurs mélanges), puis séchée (par exemple à l'air en étuve ou par lyophilisation) avant de subir l'étape d'imprégnation par la solution de précurseur de carbone ou de précurseur de céramique.

Le ou les précurseur(s) de carbone sont de préférence choisis parmi les résines phénoliques, les résorcinols, le styrène, le divinylbenzène, les polysaccharides tels que par exemple le saccharose et ses dérivés, l'amidon de pomme de terre, la lignine, les mélanges lignine-cellulose et les brais de pétrole.

Le ou les précurseurs de céramiques sont choisis parmi les polymères pré-céramiques conduisant aux oxycarbonitrures ou aux carbonitrures, nitrures ou boronitrures de carbone éventuellement métalliques et parmi lesquels on peut en particulier citer les polyaminoborazines et leurs dérivés et les polycarbazides et leurs dérivés.

Les précurseurs de carbone peuvent se présenter sous la forme de monomères, d'oligomères, de macromonomères préformés ou de polymères que l'on polymérise et/ou réticule lors de l'étape 3). Lorsqu'un brai de pétrole est utilisé à titre de précurseur de carbone, l'étape 3) n'est pas nécessairement réalisée.

Selon un mode de réalisation préféré de l'invention, le procédé est mis en oeuvre pour préparer un monolithe de carbone et le précurseur de la solution d'imprégnation est un précurseur de carbone, et encore plus préférentiellement une résine phénolique, en particulier une résine formophénolique.

Le solvant de la solution de précurseur de carbone ou de précurseur de céramique est de préférence un solvant organique choisi parmi les alcools inférieurs tels que l'éthanol, le tetrahydrofurane (THF), le toluène, et leurs mélanges. Lorsque le précurseur de carbone est choisi parmi les résines phénoliques, le solvant peut également être choisi parmi l'eau et les mélanges d'eau avec au moins un solvant organique choisi parmi les solvants cités ci-dessus, en présence d'une base.

La quantité de précurseur de carbone ou de précurseur de céramique dans la solution utilisée pour l'étape d'imprégnation peut être ajustée en fonction du diamètre des macropores que l'on souhaite obtenir dans les monolithes de carbone ou de céramique à l'issue du procédé, étant entendu que plus cette quantité est faible, plus le diamètre des macropores est grand et plus les jonctions internes (parois des macropores) sont fines. De manière générale, la quantité de précurseur de carbone ou de précurseur de céramique au sein de la solution d'imprégnation varie de 5 à 90 % en masse, et encore plus préférentiellement de 20 à 70 % en masse, par rapport à la masse totale de ladite solution.

L'étape 3) de polymérisation et/ou de réticulation du ou des précurseur(s) de carbone ou de céramique peut être réalisée par toutes les méthodes connues de l'homme du métier.

Lorsque le précurseur est un précurseur de carbone, tel que par exemple une résine phénolique, on procède à une réticulation thermique.

Lorsque le précurseur est un précurseur de carbone tel que par exemple le styrène ou le divinylbenzène, on procède à une réticulation induite par un agent réticulant choisi notamment parmi l'azo(bis)isobutyronitrile (AIBN), le peroxodisulfate de potassium et le peroxodisulfate de sodium.

Lorsque le précurseur est un précurseur de céramique, on procède à une polymérisation suivie d'une réticulation, ces deux opérations pouvant être induites par voie thermique ou photochimique.

L'étape de carbonisation de l'empreinte de silice imprégnée de précurseur de carbone ou de céramique polymérisé et/ou réticulé est généralement effectuée en atmosphère réductrice, à une température variant de 500 à 1200°C environ pendant une durée de 3 à 12 heures environ.

Lorsque l'étape de carbonisation est réalisée à une température inférieure ou égale à 600-700°C environ, le monolithe de carbone ou de céramique obtenu à l'issue du procédé présente une structure amorphe non conductrice électroniquement.

Lorsque l'étape de carbonisation est réalisée à une température supérieure à 600-700°C environ (pyrolyse), le monolithe de carbone ou de céramique obtenu présente une structure semi-graphitisée lui conférant des propriétés de semi-conducteur électronique.

Comme indiqué précédemment, l'étape d'élimination de l'empreinte de silice peut être réalisée indifféremment avant ou après l'étape de carbonisation, l'ordre de réalisation de ces deux étapes n'ayant en effet aucune incidence sur la structure du réseau poreux du monolithe résultant.

Cette étape d'élimination de l'empreinte de silice est de préférence réalisée par immersion de l'empreinte de silice imprégnée de précurseur polymérisé et/ou réticulé, ou du monolithe de carbone ou de céramique résultant de la carbonisation, dans une solution d'un acide, telle que par exemple une solution d'acide fluorhydrique ou dans une solution basique ayant un pH supérieur à 9, telle que par exemple dans une solution de soude ou de potasse. La durée de ce traitement n'est pas critique à partir du moment où il conduit à l'élimination totale de l'empreinte de silice. Cette durée varie généralement de 12 à 24 heures.

Le monolithe de carbone ou de céramique selon l'invention, susceptible d'être obtenu par la mise en oeuvre du procédé tel que défini précédemment, est nouveau en soi et constitue à ce titre un autre objet de l'invention.

L'invention a donc également pour objet un matériau solide alvéolaire se présentant sous la forme d'un monolithe poreux de carbone ou de céramique choisi parmi les oxycarbonitrures, carbonitrures, nitrures et boronitrures de carbone, caractérisé en ce que ledit matériau comprend un réseau poreux hiérarchisé constitué de macropores et de micropores interconnectés, réseau dans lequel :
i) les macropores ont une dimension moyenne d_{A} de 1 µm à 100 µm environ, de préférence de 4 à 70 µm environ, et ont des parois ayant une épaisseur de 0,5 à 40 µm, et
ii) les micropores ont une dimension moyenne d_{I} de 0,7 à 1,5 nm,
et en ce que ledit matériau est exempt de réseau mésoporeux.

Dans ce matériau, les parois des macropores ont de préférence une épaisseur de 2 à 25 µm.

Selon l'invention, les micropores sont présents dans l'épaisseur des parois des macropores, les rendant alors microporeuses.

La surface spécifique du matériau conforme à l'invention est généralement de 400 à 900 m²/g environ, préférentiellement de 500 à 700 m²/g environ.

Le matériau conforme à l'invention peut présenter une structure amorphe non cristalline ou une structure semi-graphitisée. Lorsque la structure est amorphe, ledit matériau est non conducteur de l'électricité alors que lorsque la structure est semi-graphitisée, le matériau est semi-conducteur de l'électricité. Dans ce dernier cas, la conductivité d'un tel matériau peut varier de 2 à 20 S.cm⁻¹.

Un tel matériau possède en outre d'excellentes propriétés mécaniques : Module de Young de 2.10⁻³ à 0,2 GPa (de préférence 0,2 GPa environ) et une résistance de 1 à 13 J/g environ (de préférence 13 J/g environ).

Le matériau conforme à la présente invention peut être utilisé pour différentes applications industrielles, telles que par exemple pour la fabrication de dispositifs de stockage de l'hydrogène, de super-condensateurs, d'électrodes telles que par exemple d'électrodes négatives dans les piles au lithium ou d'électrodes conductrices macroporeuses utilisables dans l'électrocatalyse ; pour la réalisation de réactions chimiques catalysées en phase hétérogène ou pour la fabrication de capteurs enzymatiques ou de biopiles, c'est-à-dire de piles dans lesquelles la cathode et l'anode sont réalisées à partir du matériau alvéolaire conforme à l'invention. En effet, les bonnes propriétés mécaniques du matériau et ses propriétés de conduction de l'électricité le cas échéant, autorisent la fabrication d'électrodes de formes variées. Le caractère conducteur du matériau entraîne une relaxation de la densité d'électrons, ce qui augmente ses propriétés catalytiques.

La présente invention est illustrée par les exemples de réalisation suivants, auxquels elle n'est cependant pas limitée.

### EXEMPLES

Les matières premières utilisées dans les exemples qui suivent sont listées ci-après :
- Bromure de tetradécyltriméthylammonium à 98 % (TTAB) : société Alfa Aesar ;
- Tetraéthoxyorthosilane à 98 % (TEOS) : société Aldrich ;
- Acétone et Dodécane à 99 % : société Rectapur ;
- Tetrahydrofurane (THF) ; acide fluorhydrique à 48 % et acide chlorhydrique à 37 % : société Analar Normapur ;
- Résine formophénolique vendue sous forme d'une solution hydroalcoolique de prépolymères, sous la dénomination Ablaphene ® RS 101 par la société Rhodia ;

Ces matières premières ont été utilisées telles que reçues des fabricants, sans purification supplémentaire.

Les différents monolithes obtenus dans les exemples ont été caractérisés sur différentes échelles de tailles.

La mésoporosité a été caractérisée de manière qualitative par une technique de microscopie électronique à transmission (MET) à l'aide d'un microscope Jeol 2000 FX ayant une tension d'accélération de 200 kV. Les échantillons ont été préparés en déposant des squelettes de silice en poudre sur une grille en cuivre revêtue d'une membrane Formvar&commat en carbone.

La macroporosité a été caractérisée de manière qualitative par une technique de microscopie électronique à balayage (MEB) à l'aide d'un microscope à balayage Jeol JSM- 840A qui fonctionne à 10 kV. Les échantillons ont été revêtus d'or ou de carbone avant leur caractérisation.

Les mesures de surface spécifique ont été faites par des techniques d'adsorption-désorption d'azote à l'aide d'un appareil commercialisé sous la dénomination Micromeritics ASAP 2010 ; le dépouillement étant fait par les méthodes de calcul B.E.T ou B.J.H..

La macroporosité a été quantifiée par des mesures d'intrusion de mercure, à l'aide d'un appareil commercialisé sous la dénomination Micromeritics Autopore IV, pour atteindre les caractéristiques des cellules minérales macroscopiques composant le squelette inorganique.

Les échantillons ont été soumis à une analyse par diffraction des rayons X (XRD) ou par diffraction des rayons X aux petits angles (SAXs), à l'aide d'une source de RX à anode tournante de 18 kW (Rigaku-200) utilisant un cristal (111) de Ge comme monochromateur. La radiation diffusée a été collectée sur un collecteur à deux dimensions (Imaging Plate system, commercialisé par Mar Research, Hamburg). La distance du détecteur à l'échantillon était de 500 mm.

Des analyses thermogravimétriques ont été réalisées sous flux d'oxygène (5 cm³.min⁻¹) à l'aide d'un analyseur thermogravimétrique commercialisé sous la dénomination Stearam TAG-1750.

Des analyses en spectroscopie infrarouge à transformée de Fournier (ou FTIR : «Fournier Transformation Infrared Spectroscopy ») ont été effectuées sur un spectromètre commercialisé sous la dénomination Nicolet 750.

Des tests de compression mécanique des matériaux ont été réalisés à l'aide d'un appareil commercialisé sous la dénomination Instron 4466. Les échantillons ont été compressés entre deux plaques rigides et les déformations mécaniques observées à différentes pressions ont été enregistrées. La vitesse de compression était de 0,5 mm/s.

### Exemple 1

### Préparation de monolithes de carbone macro- et microporeux

Dans cet exemple on illustre la préparation de différents monolithes de carbone présentant une double porosité macro/micro à partir d'un monolithe de silice micro/méso/macroporeux.

### 1) Première étape : Synthèse d'un monolithe de silice micro/méso/macroporeux (MSi).

5 g de TEOS ont été ajoutés à 16 g d'une solution aqueuse de TTAB à 35 % précédemment acidifiée par 7 g d'HCl. On a laissé l'hydrolyse se dérouler jusqu'à obtention d'un milieu hydrophile monophasique (phase aqueuse de l'émulsion). On a ensuite ajouté à cette phase aqueuse, 35 g de dodécane (phase huileuse de l'émulsion) au goutte à goutte et sous agitation. On a ensuite laissé l'émulsion se condenser sous forme d'un monolithe de silice pendant une semaine à température ambiante. Le monolithe de silice ainsi synthétisé a ensuite été lavé par un mélange THF/acétone (50/50 : v/v) pour en extraire la phase huileuse. Le monolithe de silice a alors été mis à sécher pendant une semaine à température ambiante puis il a été soumis à traitement thermique à 650°C pendant 6 heures en appliquant une vitesse de montée en température de 2°C/min., avec un plateau à 200°C pendant 2 heures. On a obtenu un monolithe de silice que l'on a désigné MSi.

### 2) Deuxième étape : Imprégnation du monolithe de silice par la résine phénolique

Le monolithe de silice MSi obtenu ci-dessus a été découpé en 5 morceaux identiques de 0,5 g chacun à l'aide d'une scie à main.

Par ailleurs, on a préparé les quatre solutions de résine phénolique Ablaphene® RS 110 suivantes :
- Solution S25 : Ablaphene ® RS 110 à 25 % en poids dans le THF,
- Solution S60 : Ablaphene ® RS 110 à 60 % en poids dans le THF,
- Solution S80 : Ablaphene ® RS 110 à 80 % en poids dans le THF,
- Solution S90 : Ablaphene ® RS 110 à 90 % en poids dans le THF.

Un morceau de 0,5 g de monolithe de silice a ensuite été immergé dans chacune des solutions S25 à S90 dans un bécher. Les béchers ont été placés sous vide jusqu'à disparition de l'effervescence afin de s'assurer d'une bonne imprégnation des matrices de silice par les solutions de résine phénolique. Après 24 heures d'agitation à température ambiante, chacune des solutions a été filtrée.

Les monolithes de silice ainsi imprégnés des solutions S25 à S90, respectivement MSiS25, MSiS60, MSiS80 et MSiS90, ont alors été lavés rapidement au THF puis séchés dans un four à une température de 80°C pendant 24 heures afin de faciliter l'évaporation du solvant et initier thermiquement la réticulation des monomères de la résine phénolique. Chacun des monolithes MSiS25 à MSiS90 a ensuite subi un deuxième traitement thermique dans une étuve à air chaud, à 155°C pendant 5 heures, avec une vitesse d'élévation de la température de 2°C/min., en effectuant un premier plateau à 80°C pendant 12 heures puis un second plateau à 110°C pendant 3 heures. On a ensuite laissé les monolithes revenir à température ambiante par simple arrêt de l'étuve. On a ainsi obtenu des monolithes de silice imprégnés par une résine phénolique réticulée (monolithes hybrides de type MSiSréti). Ces monolithes sont respectivement désignés MSiS25réti, MSiS60réti, MSiS80réti et MSiS90réti. Le monolithe MSiS80réti a été préparé en double.

### 3) Troisième étape : Synthèse des monolithes de carbone

Deux voies de synthèse ont été mises en oeuvre.

Selon la première voie de synthèse, chacun des monolithes MSiS25réti, MSiS60réti, MSiS80réti et MSiS90réti tels qu'obtenus ci-dessus à l'issue de la deuxième étape a été immergé dans trois bains successifs d'acide fluorhydrique à 10 %, puis lavé de façon abondante avec de l'eau désionisée. Ce traitement à l'acide fluorhydrique a entraîné l'élimination de l'empreinte de silice. Les monolithes résultant de ce traitement ont ensuite été séchés dans une étuve à air chaud pendant une nuit à 80°C. Après séchage, les monolithes ont été soumis à une pyrolyse à une température de 900°C pendant 1 heure sous flux d'azote en respectant une vitesse de montée en température de 4°C/min.. Les monolithes de carbone graphitisés ainsi obtenus sont respectivement désignés MS25carb, MS60carb, MS80carb et MS90carb.

La seconde voie de synthèse a été appliquée à l'autre monolithe MSiS80réti. Selon cette seconde voie, l'ordre de réalisation du traitement à l'acide fluorhydrique et de la pyrolyse a simplement été inversé, chacune de ces deux étapes étant néamnoins réalisée de façon identique au mode opératoire utilisé pour aboutir aux monolithes MScarb. Le monolithe de carbone graphitisé ainsi obtenu a été dénommé MS80HF.

### 4) Caractérisations

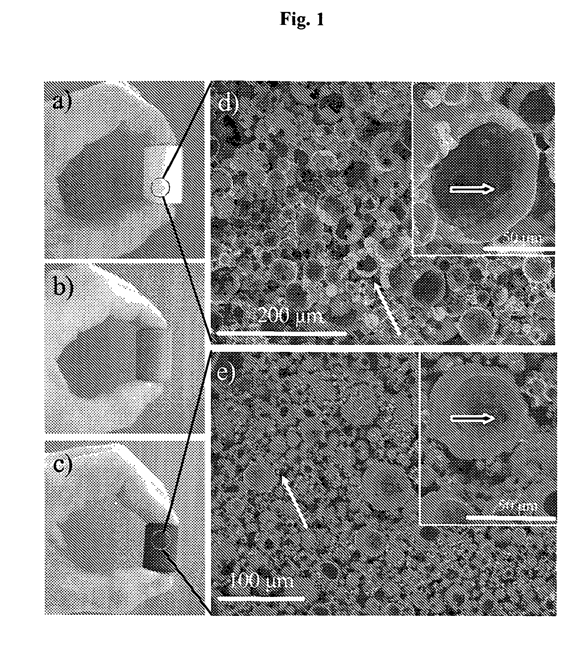

La figure 1 annexée montre des vues macroscopiques des monolithes obtenus à l'issue de chacune des trois étapes du procédé : la figure 1a) correspond à un monolithe de type MSi ; la figure 1b) correspond à un monolithe de type MSiSréti et la figure 1c) correspond à un monolithe de carbone de type MS80HF.

On constate que la forme générale du monolithe de silice utilisé à titre d'empreinte est reproduite à l'identique par le monolithe de carbone *via* le monolithe hybride de type MSiSréti. On observe également une perte de volume d'environ 45 % entre le monolithe de silice et le monolithe de carbone correspondant ; cette perte de volume est due à une sorte de tassement du matériau engendrée par l'élimination de l'empreinte de silice lors de la pyrolyse.

La figure 1 annexée montre également une vue microscopique en MEB du réseau poreaux macroscopique d'un monolithe de type MSi (fig. 1d) et du monolithe de carbone de type MS80HF. Sur ces figures, les flèches blanches indiquent les jonctions externes des pores et les flèches noires sur fond blanc indiquent les jonctions internes des pores.

On observe que la structure du réseau macroporeux du monolithe de silice est conservée dans le monolithe de carbone correspondant indiquant que celui-ci est bien la réplique sensiblement exacte de l'empreinte de silice utilisée et non son négatif.

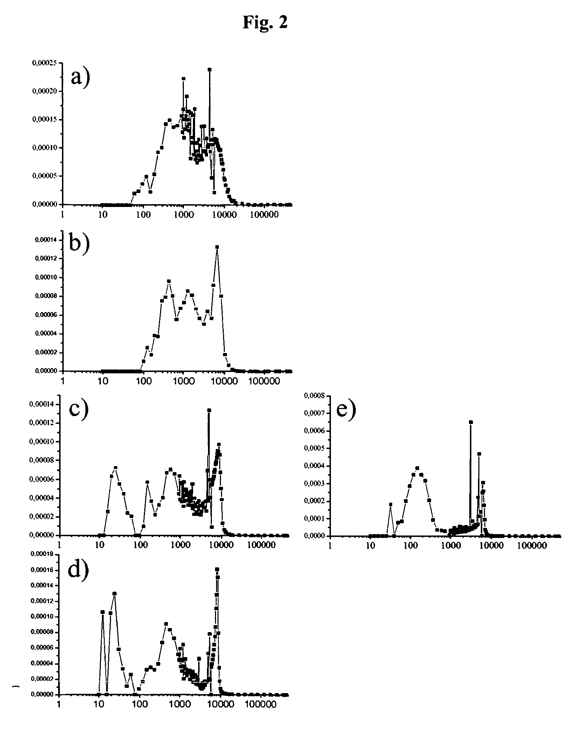

Les résultats des mesures d'intrusion au mercure effectuées sur chacun des monolithes de carbone synthétisés dans cet exemple sont reportés sur la figure 2 annexée, et sont regroupés dans le tableau 1 ci-après.

Sur la figure 2, les courbes 2a) à 2e) représentent le volume d'intrusion différentiel (en mL/g/nm) en fonction du diamètre de pores (en nm) pour chacun des monolithes de carbone (fig. 2a) : MS25carb ; fig. 2b) : MS60carb ; fig. 2c) MS80carb ; fig. 2d) : MS90carb et fig. 2e) MS80HF).

**Tableau 1**

| **Monolithes** | **MS25carb** | **MS60carb** | **MS80carb** | **MS80HF** | **MS90carb** |
|---|---|---|---|---|---|
| Volume d'intrusion (cm³.g⁻¹) | 1,4 | 1,0 | 0,6 | 0,7 | 0,5 |
| Porosité (%) | 71 | 58 | 51 | 48 | 42 |
| Densité apparente (g.cm³) | 0,5 | 0,6 | 0,8 | 0,7 | 0,9 |
| Densité du squelette (g.cm³) | 1,7 | 1,5 | 1,6 | 1,4 | 1,5 |

Ces résultats montrent que le volume du réseau macroporeux est inversement proportionnel à la concentration de la solution de résine formophénolique utilisée pour imprégner le monolithe MSi (diminution du volume d'intrusion et du pourcentage de porosité lorsque l'on va de MS25carb vers MS90carb). Le diamètre des macropores est poly dispersé et varie de 10 à 10 000 nm (Figure 2).

NB : Les mesures d'imprégnation au mercure ne sont valides que dans la gamme des macropores. Les quelques points apparaissant dans la zone de diamètres comprise entre 2 et 50 nm sur les figures 2c et 2d notamment sont des artéfacts de mesures ou des défauts ponctuels des matériaux mais ne correspondent en aucun cas à la présence d'un réseau mésoporeux. L'absence de réseau mésoporeux a par ailleurs été confirmée par les mesures d'adsorption-désorption d'azote (voir Tableau 2 et conclusion du tableau 2 ci-après).

La densité finale du squelette de carbone de chacun des monolithes est par contre sensiblement identique dans chacun des cas, du fait que le squelette est exclusivement constitué de carbone partiellement graphitisé.

Les résultats obtenus avec MS80carb et MS80HF ne sont pas significativement différents, ce qui démontre que les deux voies de synthèse utilisées lors de l'étape 3) de carbonisation sont équivalentes.

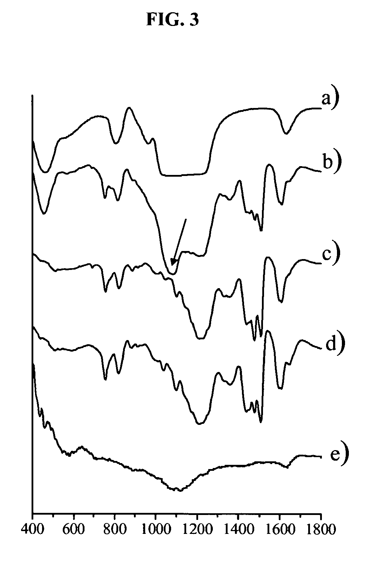

Il a également été vérifié, par spectroscopie Infrarouge à transformée de Fournier, que le traitement à l'acide fluorhydrique effectué lors de la troisième étape permet d'éliminer l'empreinte de silice. La figure 3 annexée représente les spectres FITR obtenus avec l'empreinte de silice Msi (Figure 3a)), une matrice de silice après imprégnation et réticulation d'une solution de résine formophénolique : MSiSréti (figure 3b)), une matrice de silice de type MSiSréti ayant subi un traitement à l'acide fluorhydrique mais pas de carbonisation (Figure 3c)), une matrice de résine formophénolique réticulée obtenue par simple réticulation par traitement thermique de 1 ml de résine formophénolique Ablaphene® RS 101 dans un pilulier en verre (Figure 3d)) et un monolithe de carbone MScarb (Figure 3e)). Sur cette figure 3, la transmittance exprimée en unités arbitraires est fonction de la longueur d'onde exprimée en cm⁻¹. La flèche noire indique le pic caractéristique de Si-O à 1076 cm⁻¹. Les spectres 3a) et 3b) des monolithes Msi et MSiSréti présentent tous les deux une forte absorption centrée à 1076 cm⁻¹ significative de la présence de silice. Sur le spectre 3d) correspondant à la matrice de résine formophénolique pure, ce pic est bien sûr absent comme cela est le cas également sur les spectres 3c) et 3e). Ces résultats démontrent que l'empreinte de silice a été complètement éliminée par le traitement à l'acide fluorhydrique. Le spectre du monolithe de carbone MScarb est assez plat ; les pics correspondants aux orbitales Sp² et Sp³ des cycles aromatiques se situant respectivement vers 1650 cm⁻¹ et 1100 cm⁻¹.

Les mesures de surface spécifique de chacun des monolithes de carbone obtenus sont regroupées dans le tableau 2 ci-après :

**Tableau 2**

| **Monolithes** | **MS25carb** | **MS60carb** | **MS80carb** | **MS80HF** | **MS90carb** |
|---|---|---|---|---|---|
| Surface spécifique par B.E.T. (m².g⁻¹) | 550 | 700 | 460 | 400 | 450 |
| Surface spécifique par B.J.H. (m².g⁻¹) ^{a} | - | 12 | 11 | 2 | 5 |
| Volume total des pores (cm³.g⁻¹) | 0,25 | 0,24 | 0,23 | 0,20 | 0,22 |

| | | | | | |
|---|---|---|---|---|---|
| ^{a} : la méthode B.J.H. a été appliquée uniquement aux pores dont le diamètre était supérieur à 17Å et pour la courbe de désorption. | | | | | |

A partir de ces résultats, on peut conclure que les monolithes ont un caractère microporeux (taille des pores comprise entre 7 et' 12 Å), et ne présentent pas de mésoporosité.

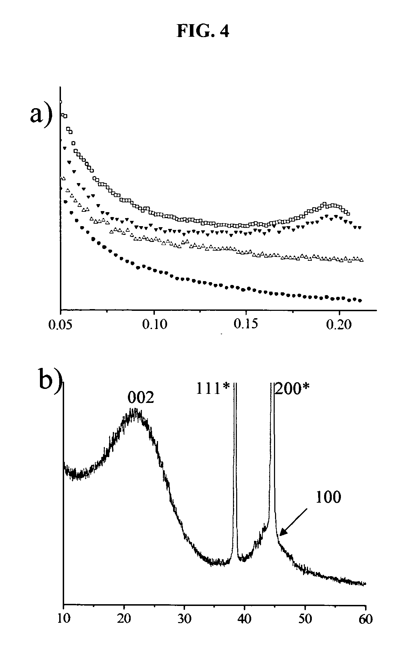

L'étude de la porosité à l'échelle mésoscopique évaluée par SAXS est reportée sur la figure 4a) annexée. Les profils de diffusion ont été établis pour chacun des monolithes de carbone synthétisés (MSi : □, MSiS80réti : ▼, MS80carb : Δ et MS80HF : ●). Sur cette figure, l'intensité exprimée en unités arbitraires est fonction du vecteur d'onde (q) exprimé en Å⁻¹.

On constate que les matrices de silice pure MSi et de silice imprégnée de résine réticulée MSiSréti possèdent une mésoporosité non ordonnée avec une distance entre deux pores de 32 Å (vecteur d'onde q = 0,195Å⁻¹). On constate par ailleurs une absence de mésoporosité dans les autres monolithes.

Lorsque l'on considère la figure 4b) qui représente le spectre de diffraction XRD d'un monolithe de carbone de type MS80HF (intensité en unités arbitraires en fonction de l'angle de diffraction en degrés), on observe deux pics principaux (2Q = 22° et 2Q = 45°) qui correspondent respectivement aux pics caractéristiques des composés carbonés graphitisés (d(002) = 0,4 nm et d(100)/d(101)).

Les monolithes de carbone de type MScarb et MS80HF ainsi graphitisés présentaient une conductivité de l'ordre de 10 S.cm⁻¹.

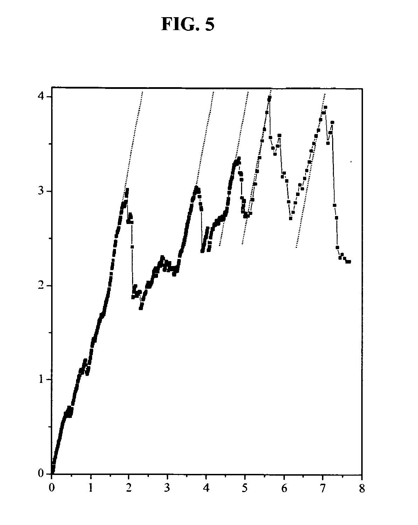

Les résultats des tests de compression mécanique effectués sur le monolithe de carbone MS80HF sont donnés par la figure 5 annexée sur laquelle la contrainte (en MPa) est fonction de la déformation (en %). La courbe en dents de scies révèle des chutes abruptes de la contrainte qui sont dues à une rupture partielle de la structure macroporeuse du monolithe (rupture de la paroi des macropores). Sur cette figure, les lignes obliques en pointillés mettent en évidence que chaque créneau commence avec la même pente quelle que soit la valeur de la contrainte appliquée. Ce résultat est significatif d'un comportement en régime élastique.

Les Modules de Young moyens calculés à partir de ces résultats sont de l'ordre de 0,2 GPa et reflètent la très grande résistance des matériaux obtenus autorisant leur utilisation par exemple pour la fabrication d'épurateurs d'hydrogène, de super-condensateurs, d'électrodes, en particulier d'anodes dans les piles à lithium ou bien encore d'électrodes modifiées par des enzymes spécifiques pour des capteurs biologiques.

### Exemple 2

### Préparation d'un capteur enzymatique

Dans cet exemple on illustre la préparation d'un capteur enzymatique (CE) pour la détection du glucose, à partir d'un monolithe de carbone et d'un bioélectrocatalyseur comprenant la glucose oxydase et son polymère rédox polyacrylamide-poly(N-vinylimidazole)-[Os(4,4'-dichloro-2,2'-bipyridine)₂Cl]^{+/2+} également dénommé Polyvinylpyridine-[Os(N',N'-dialkylated-2,2'-biimidazole)3]^{2+/3+}(PVP-[Os(N',N'-dialkylated-2,2'-biimidazole)3]^{2+/3+}

Le monolithe de carbone utilisé dans cet exemple a été préparé exactement comme décrit ci-dessus à l'exemple 1 sauf que l'on a utilisé pour l'étape d'imprégnation de l'empreinte de silice telle qu'obtenue à l'étape 1) de l'exemple 1, une solution de résine phénolique à 40 %, soit une Solution S40 : Ablaphene ® RS 110 à 40 % en poids dans le THF.

On a obtenu un monolithe de silice imprégné de la solution S40 soit un monolithe MSiS40.

La synthèse du monolithe de carbone a alors été effectuée selon la première voie de synthèse décrite ci-dessus à l'étape 3) de l'exemple 1.

On a obtenu un monolithe de carbone MS40carb dont les caractéristiques de porosité étaient les suivantes :
* Mésoporosité (adsorption-désorption d'azote) :
   Surface des micropores : 523 m².g⁻¹
   Volume microporeux : 0,27 cm³.g⁻¹
* Macroporosité (porosimétrie mercure) :
   Volume d'intrusion : 1,73 cm³.g⁻¹
   Porosité : 74 %
   Densité apparente : 0,43 g.cm³
   Densité du squelette : 1,64 g.cm³

La fonctionnalisation du monolithe de carbone MS40carb par le bioélectrocatalyseur a ensuite été effectuée selon le procédé suivant :

### Fixation de l'électrobiocatalyseur (polymère redox + glucose oxydase)

On a préparé une solution de glucose oxydase en mélangeant 1 µl de glucose oxydase purifiée concentrée (à 100 mg/ml) vendue par la société Fluka et 1,5 µl d'une solution de NaHCO₃ 0,1M. On a ensuite ajouté à ce mélange, 1 µl d'une solution à 7 mg/ml de NaIO₄. On a obtenu une solution de glucose oxydase à 28,6 mg/ml qui été laissée reposer dans le noir pendant 1 heure.

L'électrobiocatalyseur consiste en un mélange de 4 µl d'une solution à 10 mg/ml du polymère rédox dans de l'eau millipure, 0,82 µl de la solution de glucose oxydase à 23 mg/ml telle que préparée ci-dessus et 1,67 µl d'une solution de polyéthylèneglycol diglycidyléther (PEGDE) à 2 mg/ml dans de l'eau millipure.

Le monolithe de carbone a été collé sur une sous électrode en graphite de 5 mm de diamètre (GC electrode, Pine, USA), au moyen d'une peinture conductrice en carbone puis soumis à un plasma d'oxygène 1 Torr pendant 15 minutes.

L'électrobiocatalyseur (6,5 µl environ) a ensuite été déposé au sommet du monolithe de carbone pour en imprégner la porosité. Le monolithe a été laissé sécher pendant 18 heures.

On a ainsi obtenu un capteur enzymatique CE-MS40carb.

A titre d'exemple comparatif, une électrode en carbone vitreux (CV) de 5 mm de diamètre (Pine Research Instrumentation, Raleigh, North Carolina, USA) a également été fonctionnalisée par le bioélectrocatalyseur selon le procédé mis en oeuvre pour le monolithe MS40carb.

On a ainsi obtenu un capteur enzymatique CE-CV non conforme à l'invention.

Ces deux capteurs ont ensuite été testés pour la détection du glucose en milieu liquide. Les mesures ont été réalisées avec un bipotentiostat (CH-Instrument, Détecteur électrochimique modèle CHI832) relié à un ordinateur. La température du milieu liquide, constitué par une solution de glucose à 50.10⁻³ M dans un tampon phosphate (PBS), a été régulée à 37,5°C à l'aide d'un bain thermostaté (Fisher Scientific, Pittsburgh, PA).Les capteurs enzymatiques CE-MS40carb ou CE-CV ont été maintenus en mouvement dans la solution de glucose à l'aide d'un agitateur Pine Instrument® (Austin TX, USA). Les mesures ont été effectuées dans une cellule électrochimique à bain d'eau.

Au début de l'expérience, le milieu liquide a été soumis à un bullage d'argon pendant 15 minutes. Afin de maintenir le volume de la solution de glucose constant, l'argon a été préalablement présaturé avec de l'eau par passage au travers d'un tube de barbotage contenant du PBS.

Les mesures des potentiels ont été faites avec une électrode de référence commerciale Ag/AgCl (3 M KCl) et en utilisant une électrode de platine comme contre électrode (BAS).

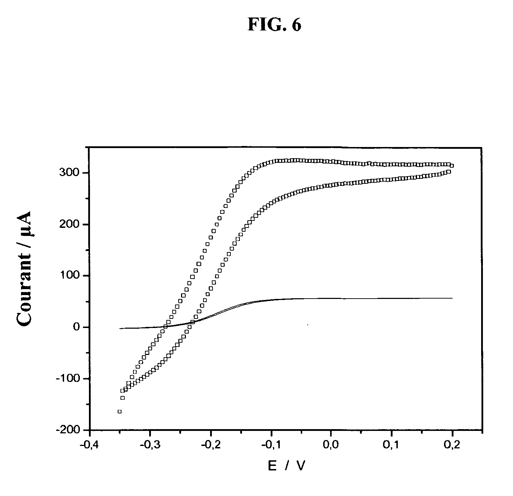

Les résultats obtenus avec les capteurs enzymatiques CE-MS40carb et CE-CV sont reportés sur la figure 6 annexée sur laquelle la densité du courant (en µA) est fonction du potentiel électrique (en volt). Sur cette figure, la courbe en trait continu représente l'électroréduction du glucose obtenue avec le capteur CE-CV ne faisant pas partie de l'invention et la courbe avec les carrés représente l'électroréduction du glucose obtenue avec le capteur CE-MS40carb conforme à l'invention.

On constate qu'à +0 V/AgAgCl, il est possible d'oxyder le glucose à une densité de courant de 300 µA en utilisant le capteur CE-MS40carb contre seulement 25 µA avec le capteur CE-CV. On remarque que la courbe densité du courant en fonction du potentiel appliqué est beaucoup plus exaltée dans le cas du capteur CE-MS40carb que dans le cas du capteur CE-CV, ce qui traduit la sensibilité exaltée du matériau proposé dans le cadre de la présente invention.

## Revendications

1. Procédé de préparation d'un monolithe de carbone ou de céramique alvéolaire comportant un réseau poreux hiérarchisé comprenant des macropores et des micropores interconnectés, ledit réseau poreux étant exempt de mésopore, **caractérisé en ce qu'**il comprend au moins les étapes suivantes :
1) une étape de préparation d'une empreinte de silice solide sous la forme d'un monolithe alvéolaire constitué d'une matrice de silice ou de silice organiquement modifiée, ledit monolithe comprenant des macropores ayant une dimension moyenne d_{A} de 1 µm à 100 µm ; des mésopores ayant une dimension moyenne d_{E} de 2 à 50 nm et des micropores ayant une dimension moyenne d_{I} de 0,7 à 1,5 nm, lesdits pores étant interconnectés ;
2) une étape d'imprégnation, sous vide, de l'empreinte de silice solide par une solution d'au moins un précurseur de carbone ou d'au moins un précurseur de céramique choisis parmi les polymères pré-céramiques conduisant aux oxycarbonitrures, carbonitrures, nitrures ou boronitrures de carbone ;
3) une étape de polymérisation et/ou de réticulation dudit précurseur au sein de l'empreinte de silice solide ;
4) une étape de carbonisation de l'empreinte de silice solide renfermant ledit précurseur polymérisé et/ou réticulé ;
5) l'obtention dudit monolithe de carbone ou de céramique par élimination de l'empreinte de silice solide par traitement avec un acide ou une base, ledit traitement étant effectué indifféremment avant ou après ladite étape de carbonisation ;
et **en ce que**, lors de la première étape, la préparation de l'empreinte de silice est réalisée selon un procédé consistant à :
- préparer une émulsion en introduisant une phase huileuse dans une solution aqueuse de tensioactif,
- à ajouter une solution aqueuse d'au moins un précurseur d'oxyde de silice et/ou d'au moins un précurseur d'oxyde de silice organiquement modifié à la solution de tensioactif, avant ou après la préparation de l'émulsion,
- à laisser le mélange réactionnel au repos jusqu'à la condensation dudit précurseur, puis
- à sécher le mélange pour obtenir l'empreinte de silice solide attendue, et
- lorsque l'empreinte de silice est préparée à partir d'une solution aqueuse d'au moins un précurseur d'oxyde de silice non organiquement modifié, alors ledit procédé comprend en outre une étape supplémentaire consistant à traiter thermiquement l'empreinte de silice solide à une température d'au moins 650°C.

2. Procédé selon la revendication 1, **caractérisé en ce que** le ou les précurseur(s) d'oxyde de silice ou d'oxyde de silice organiquement modifié utilisés lors de la première étape de préparation de l'empreinte de silice sont choisis parmi les tetralcoxydes de silice de formule (I) suivante :
R'ₙ(OR)₄₋ₙ (I)
dans laquelle :
- R représente un radical alkyle ayant de 1 à 5 atomes de carbone ou un groupement de formule (II) suivante :
-(CH₂)ₘ-R₁ (II)
dans laquelle 0≤m≤5, et R₁ est choisi parmi un groupe thiol, un groupe pyrrole, un groupe amino qui porte éventuellement un ou plusieurs substituants alkyle, alkylamino ou aryle éventuellement substitué, un groupe alkyle ou un groupe phényle qui porte éventuellement un substituant R₂ de type alkyle,
- R' représente un radical alkyle ayant de 1 à 5 atomes de carbone ou un radical aryle qui portent éventuellement un ou plusieurs groupes fonctionnels, et
- 0 ≤ n < m ; m étant la valence de l'atome de silicium.

3. Procédé selon la revendication 2, **caractérisé en ce que** le ou les précurseur(s) de formule (I) sont choisis parmi le tetraméthoxysilane, le tetraéthoxyorthosilane, le (3-mercaptopropyl)triméthoxysilane, le (3-aminopropyl)triéthoxysilane, le N-(3-triméthoxysilylpropyl)pyrrole, le 3-(2,4-dinitrophényl)propyltriéthoxysilane, le N-(2-aminoéthyl)-3-aminopropyltriméthoxysilane, le phényltriéthoxysilane et le méthyltriéthoxysilane.

4. Procédé selon l'une quelconque des revendications précédentes, **caractérisé en ce que** l'empreinte de silice obtenue à la fin de la première étape est lavée à l'aide d'un solvant organique, puis séchée avant de subir l'étape d'imprégnation par la solution de précurseur de carbone ou de précurseur de céramique.

5. Procédé selon l'une quelconque des revendications précédentes, **caractérisé en ce que** le ou les précurseur(s) de carbone sont choisis parmi les résines phénoliques, les résorcinols, le styrène, le divinylbenzène, les polysaccharides, l'amidon de pomme de terre, la lignine, les mélanges lignine-cellulose et les brais de pétrole.

6. Procédé selon l'une quelconque des revendications 1 à 4, **caractérisé en ce que** le ou les précurseurs de céramiques sont choisis parmi les polyaminoborazines et leurs dérivés et les polycarbazides et leurs dérivés.

7. Procédé selon l'une quelconque des revendications précédentes, **caractérisé en ce que** le solvant de la solution de précurseur de carbone ou de précurseur de céramique est un solvant organique choisi parmi les alcools inférieurs, le tetrahydrofurane, le toluène, et leurs mélanges.

8. Procédé selon l'une quelconque des revendications 1 à 5, **caractérisé en ce que** le précurseur est un précurseur de carbone choisi parmi les résines phénoliques et que le solvant est choisi parmi l'eau et les mélanges d'eau avec au moins un solvant organique choisi parmi les alcools inférieurs, le tetrahydrofurane et le toluène, en présence d'une base.

9. Procédé selon l'une quelconque des revendications précédentes, **caractérisé en ce que** l'étape de carbonisation de l'empreinte de silice imprégnée de précurseur de carbone ou de céramique polymérisé et/ou réticulé est effectuée en atmosphère réductrice, à une température variant de 500 à 1200°C.

10. Procédé selon l'une quelconque des revendications précédentes, **caractérisé en ce que** l'étape de carbonisation est réalisée à une température inférieure ou égale à 600-700°C et que le monolithe de carbone ou de céramique obtenu à l'issue du procédé présente une structure amorphe non conductrice électroniquement.

11. Procédé selon l'une quelconque des revendications 1 à 10, **caractérisé en ce que** l'étape de carbonisation est réalisée à une température supérieure à 600-700°C et que le monolithe de carbone ou de céramique obtenu à l'issu du procédé présente une structure semi-graphitisée et est un semi-conducteur électronique.

12. Matériau solide alvéolaire se présentant sous la forme d'un monolithe poreux de carbone ou de céramique choisi parmi les oxycarbonitrures, carbonitrures, nitrures et boronitrures de carbone, **caractérisé en ce que** ledit matériau comprend un réseau poreux hiérarchisé constitué de macropores et de micropores interconnectés, réseau dans lequel :
i) les macropores ont une dimension moyenne d_{A} de 1 µm à 100 µm, et ont des parois ayant une épaisseur de 0,5 à 40 µm, et
ii) les micropores ont une dimension moyenne d_{I} de 0,7 à 1,5 nm,
et **en ce que** ledit matériau est exempt de réseau mésoporeux.

13. Matériau selon la revendication 12, **caractérisé en ce que** sa surface spécifique est de 400 à 900 m²/g.

14. Matériau selon la revendication 12 ou 13, **caractérisé en ce qu'**il présente une structure amorphe et est non conducteur de l'électricité.

15. Matériau selon la revendication 12 ou 13, **caractérisé en ce qu'**il présente une structure semi-graphitisée et est semi-conducteur de l'électricité.

16. Matériau selon la revendication 15, **caractérisé en ce que** la conductivité dudit matériau varie de 2 à 20 S. cm⁻¹.

17. Utilisation d'un matériau tel que défini à l'une quelconque des revendications 12 à 16, pour la fabrication de dispositifs de stockage de l'hydrogène, de super-condensateurs, d'électrodes ; pour la réalisation de réactions chimiques catalysées en phase hétérogène ou pour la fabrication de capteurs enzymatiques ou de biopiles.

## Patentansprüche

1. Verfahren zur Herstellung eines wabenartigen Karbon- oder Keramikmonolithen, der ein hierarchisiertes poröses Netzwerk aufweist, das miteinander verbundene Makroporen und Mikroporen umfasst, wobei das poröse Netzwerk keine Mesopore aufweist, **dadurch gekennzeichnet, dass** es mindestens die folgenden Schritte umfasst:
1) einen Schritt der Herstellung eines festen Siliziumoxidabdrucks in Form eines wabenartigen Monolithen, der aus einer Matrix aus Siliziumoxid oder organisch modifiziertem Siliziumoxid besteht, wobei der Monolith Makroporen mit einer mittleren Größe d_{A} von 1 µm bis 100 µm, Mesoporen mit einer mittleren Größe d_{E} von 2 bis 50 nm und Mikroporen mit einer mittleren Größe d_{I} von 0,7 bis 1,5 nm umfasst, wobei die Poren miteinander verbunden sind,
2) einen Schritt der Vakuumimprägnierung des festen Siliziumoxidabdrucks durch eine Lösung mindestens eines Karbonvorläufers oder mindestens eines Keramikvorläufers, die aus den präkeramischen Polymeren ausgewählt sind, die zu den Oxycarbonitriden, Carbonitriden, Kohlenstoffnitriden oder -bornitriden führen,
3) einen Schritt der Polymerisation und/oder der Vernetzung des Vorläufers innerhalb des festen Siliziumoxidabdrucks,
4) einen Schritt der Carbonisierung des festen Siliziumoxidabdrucks bei Einschluss des polymerisierten und/oder vernetzten Vorläufers,
5) den Erhalt des Karbon- oder Keramikmonolithen durch Entfernen des festen Siliziumoxidabdrucks durch Bearbeitung mit einer Säure oder einer Base, wobei die Bearbeitung in gleicher Weise vor oder nach dem Carbonisierungsschritt durchgeführt wird,
und dass beim ersten Schritt die Herstellung des Siliziumabdrucks gemäß einem Verfahren durchgeführt wird, das darin besteht:
- Vorbereiten einer Emulsion durch Einführen einer Ölphase in eine wässrige Tensidlösung,
- Hinzufügen einer wässrigen Lösung mindestens eines Siliziumoxidvorläufers und/oder mindestens eines organisch modifizierten Siliziumoxidvorläufers in die Tensidlösung vor oder nach der Vorbereitung der Emulsion,
- Ruhenlassen des Redaktionsgemischs bis zur Kondensation des Vorläufers, dann
- Trocknen des Gemischs, um den erwarteten festen Siliziumoxidabdruck zu erhalten, und
- wenn der Siliziumoxidabdruck aus einer wässrigen Lösung mindestens eines nicht organisch modifizierten Siliziumoxidvorläufers hergestellt ist, das Verfahren dann ferner einen zusätzlichen Schritt umfasst, der darin besteht, den festen Siliziumoxidabdruck bei einer Temperatur von mindestens 650 °C thermisch zu bearbeiten.

2. Verfahren nach Anspruch 1, **dadurch gekennzeichnet, dass** der oder die Vorläufer aus Siliziumoxid oder organisch modifiziertem Siliziumoxid, die während des ersten Schritts der Herstellung des Siliziumoxidabdrucks verwendet werden, aus den Siliziumoxid-Tetralcoxiden der folgenden Formel (I) ausgewählt sind:
R'ₙ(OR)₄₋ₙSi (I)
wobei:
- R ein Alkylradikal mit 1 bis 5 Kohlenstoffatomen oder eine Gruppe der folgenden Formel (II):
-(CH₂)ₘ-R₁ (II)
darstellt, wobei 0≤m≤5, und R₁ aus einer Thiolgruppe, einer Pyrrolgruppe, einer Aminogruppe, die eventuell einen oder mehrere Alkyl-, Alkylamin- oder Arylsubstituenten trägt, eventuell substituiert, einer Alkyl- oder einer Phenylgruppe, die eventuell einen Substituenten R₂ vom Alkyltyp trägt, ausgewählt ist,
- R' ein Alkylradikal mit 1 bis 5 Kohlenstoffatomen oder ein Arylradikal darstellt, die eventuell eine oder mehrere Funktionsgruppen tragen, und
- 0≤n<m, wobei m die Wertigkeit des Siliziumatoms ist.

3. Verfahren nach Anspruch 2, **dadurch gekennzeichnet, dass** der oder die Vorläufer der Formel (I) aus dem Tetramethoxysilan, dem Tetraethoxyorthosilan, dem (3-Mercaptopropyl)trimethoxysilan, dem (3-Aminopropyl)triethoxysilan, dem N-3-Trimethoxysilylpropyl)pyrrol, dem 3-(2,4-Dinitrophenyl)propyltriethoxysilan, dem N-2-Aminoethyl)-3-aminopropyltrimethoxysilan, dem Phenyltriethoxysilan und dem Methyltriethoxysilan ausgewählt sind.

4. Verfahren nach einem der vorangehenden Ansprüche, **dadurch gekennzeichnet, dass** der am Ende des ersten Schritts erhaltene Siliziumoxidabdruck mit Hilfe eines organischen Lösungsmittels gewaschen wird, dann getrocknet, bevor er dem Schritt der Imprägnierung durch die Karbonvorläufer- oder Keramikvorläuferlösung unterzogen wird.

5. Verfahren nach einem der vorangehenden Ansprüche, **dadurch gekennzeichnet, dass** der oder die Karbonvorläufer aus den Phenolharzen, den Resorcinen, dem Styrol, dem Divinylbenzen, den Polysacchariden, der Kartoffelstärke, dem Lignin, den Lignin-Zellulose-Mischungen und den Petrolpechen ausgewählt sind.

6. Verfahren nach einem der Ansprüche 1 bis 4, **dadurch gekennzeichnet, dass** der oder die Keramikvorläufer aus den Polyaminborazinen und ihren Derivaten und den Polycarbaziden und ihren Derivaten ausgewählt sind.

7. Verfahren nach einem der vorangehenden Ansprüche, **dadurch gekennzeichnet, dass** das Lösungsmittel der Karbonvorläufer- oder Keramikvorläuferlösung ein organisches Lösungsmittel ist, das aus den niedrigen Alkoholen, dem Tetrahydrofuran, dem Toluen und ihren Gemischen ausgewählt ist.

8. Verfahren nach einem der Ansprüche 1 bis 5, **dadurch gekennzeichnet, dass** der Vorläufer ein Karbonvorläufer ist, der aus den Phenolharzen ausgewählt ist und dass das Lösungsmittel aus dem Wasser und den Wassergemischen mit mindestens einem organischen Lösungsmittel ausgewählt ist, das aus den niedrigen Alkoholen, dem Tetrahydrofuran und dem Toluen ausgewählt ist, in Anwesenheit einer Base.

9. Verfahren nach einem der vorangehenden Ansprüche, **dadurch gekennzeichnet, dass** der Karbonisierungsschritt des mit polymerisierten und/oder vernetzten Karbon- oder Keramikvorläufer imprägnierten Siliziumoxidabdrucks in reduzierter Atmosphäre bei einer Temperatur von 500 bis 1200 °C durchgeführt wird.

10. Verfahren nach einem der vorangehenden Ansprüche, **dadurch gekennzeichnet, dass** der Karbonisierungsschritt bei einer Temperatur von unter oder gleich 600-700 °C durchgeführt wird und dass der Karbon- oder Keramikmonolith, der nach dem Verfahren erhalten wird, eine amorphe elektronisch nicht leitende Struktur aufweist.

11. Verfahren nach einem der Ansprüche 1 bis 10, **dadurch gekennzeichnet, dass** der Karbonisierungsschritt bei einer Temperatur von über 600-700 °C durchgeführt wird und dass der Karbon- oder Keramikmonolith, der nach dem Verfahren erhalten wird, eine semi-graphitisierte Struktur aufweist und ein elektronischer Halbleiter ist.

12. Wabenartiges festes Material in Form eines porösen Karbon- oder Keramikmonolithen, das aus den Oxicarbonitriden, Carbonitriden, Kohlenstoffnitriden und -bornitriden ausgewählt ist, **dadurch gekennzeichnet, dass** das Material ein hierarchisiertes poröses Netzwerk aus miteinander verbundenen Makroporen und Mikroporen umfasst, wobei in dem Netzwerk:
i) die Makroporen eine mittlere Größe d_{A} von 1 µm bis 100 µm haben, die Wände mit einer Dicke von 0,5 bis 40 µm haben, und
ii) die Mikroporen eine mittlere Größe d_{I} von 0,7 bis 1,5 nm haben,
und dass das Material kein Mesoporennetzwerk hat.

13. Material nach Anspruch 12, **dadurch gekennzeichnet, dass** seine spezifische Oberfläche von 400 bis 900 m²/g ist.

14. Material nach Anspruch 12 oder 13, **dadurch gekennzeichnet, dass** es eine amorphe Struktur aufweist und elektrisch nicht leitend ist.

15. Material nach Anspruch 12 oder 13, **dadurch gekennzeichnet, dass** es eine semi-graphitisierte Struktur aufweist und elektrisch halbleitend ist.

16. Material nach Anspruch 15, **dadurch gekennzeichnet, dass** die Konduktivität des Materials von 2 bis 20 S.cm⁻¹ schwankt.

17. Verwendung eines Materials nach einem der Ansprüche 12 bis 16 zur Herstellung von Vorrichtungen zum Speichern von Wasserstoff, von Superkondensatoren, von Elektroden, für die Durchführung von katalysierten chemischen Reaktionen in heterogener Phase oder für die Herstellung von Enzymsensoren oder von Biobatterien.

## Claims

1. A method for preparing a honeycomb ceramic or carbon monolith including a hierarchical porous lattice comprising interconnected macropores and micropores, said porous lattice being free of mesopores, characterizing that it comprises at least the following steps:
1) a step for preparing a solid silica imprint in the form of a honeycomb monolith consisting of a silica or organically modified silica matrix, said monolith comprising macropores having an average size d_{A} from one µm to 100 µm; mesopores having an average size d_{E} from 2 to 50 nm and micropores having an average size dᵢ from 0.7 to 1.5 nm, said pores being interconnected;
2) a step for impregnating *in vacuo* the solid silica imprint with a solution of at least one carbon precursor or at least one ceramic precursor selected from pre-ceramic polymers leading to carbon oxycarbonitrides, carbonitrides, nitrides or boronitrides;
3) a step for polymerization and/or crosslinking of said precursor within the solid silica imprint;
4) a step for carbonization of the solid silica imprint containing said polymerized and/or crosslinked precursor;
5) obtaining said carbon or ceramic monolith by removing the solid silica imprint by treatment with an acid or a base, said treatment being equally carried out before or after said carbonization step; and
in that, during the first step, the preparation of the silica imprint is carried out according to a method consisting of:
- preparing an emulsion by introducing an oily phase into an aqueous surfactant solution,
- adding an aqueous solution to at least one silica oxide precursor and/or at least one organically modified silica oxide precursor to the surfactant solution, before and after preparing the emulsion,
- leaving the reaction mixture at rest until condensation of said precursor, and then
- drying the mixture in order to obtain the expected solid silica imprint, and
- when the silica imprint is prepared from an aqueous solution of at least one silica oxide precursor not organically modified, then said method further comprises an additional step consisting of heat-treating the solid silica imprint at a temperature of at least 650°C.

2. The method according to claim 1, **characterized in that** said silica oxide or organically modified silica oxide precursor(s) used during the first step for preparing the silica imprint are selected from the silica tetralkoxides of the following formula (1):
Rₐ(OR)_{4-B}Si (I)
wherein:
- R represents a alkyl radical having from 1 to 5 carbon atoms or a group of the following formula (2)
-(CH₂)ₘ-R₁ (II)
wherein 0≤m≤5, and R₁ is selected from a thiol group, a pyrrole group, an amino group which optionally bears one or several alkyl, alkyl amino or aryl substituents, optionally substituted, an alkyl group or a phenyl group which optionally bears a substituent R₂ of the alkyl type,
- R₁ represents an alkyl radical having from 1 to 5 carbon atoms or an aryl radical which optionally bear one or several functional groups, and
- 0≤m <m; m being the valency of the silicon atom.

3. The method according to claim 2, **characterized in that** said precursor(s) of formula (I) is(are) selected from tetramethoxysilane, tetraaethoxyorthosilane, (3-mercaptopropyl)trimethoxysilane, (3-aminopropyl)triethoxysilane, N-(3-trimethoxy-silylpropyl)pyrrole, 3(2,4-dinitrophenyl)propyltriethoxysilane, N-(2-aminoethyl)-3-aminopropyltrimethoxysilane, phenyltriethoxylsilane and methyltriethoxysilane.

4. The method according to any of the preceding claims, **characterized in that** the silica imprint obtained at the end of the first step is washed with an organic solvent, and then dried before being subject to the impregnation step with the carbon precursor or ceramic precursor solution.

5. The method according to any of the preceding claims, **characterized in that** the carbon precursor(s) is(are) selected from phenolic resins, resorcinols, styrene, divinylbenzene, polysaccharides, potato starch, lignin, lignin-cellulose mixtures and petroleum tars.

6. The method according to any of the claims 1 to 4, **characterized in that** the ceramic precursor(s) is(are) selected from polyaminoborazines and derivatives thereof and polycarbozides and derivatives thereof.

7. The method according to any of the preceding claims, **characterized in that** the solvent of the carbon precursor or ceramic precursor solution is an organic solvent selected from lower alcohols, tetrahydrofurane, toluene and mixtures thereof.

8. The method according to any of claims 1 to 5, **characterized in that** the precursor is a carbon precursor selected from phenolic resins and that the solvent is selected from water and mixtures of water with at least one organic solvent selected from lower alcohols, tetrahydrofurane and toluene, in the presence of a base.

9. The method according to any of the preceding claims, **characterized in that** the step for carbonization of the silica imprint impregnated with a carbon or ceramic precursor, polymerized and/or crosslinked is carried out in a reducing atmosphere, at a temperature varying from 500 to 1200°C.

10. The method according to any of the preceding claims, **characterized in that** the carbonization step is carried out at a temperature of less than or equal to 600-700°C and that the carbon or ceramic monolith obtained at the end of the method has a non-electron-conducting amorphous structure.

11. The method according to any of the claims 1 to 10, **characterized in that** the carbonization step is carried out a temperature of more than 600-700°C and that the carbon or ceramic monolith obtained at the end of the method has a semi-graphitized structure and is an electronic semiconductor.

12. A honeycomb solid material appearing as a porous carbon or ceramic monolith selected from oxycarbonitrides, carbonitrides, nitrides, and boronitrides, **characterized in that** said material comprises a hierarchical porous network consisting of interconnected macropores and micropores, a network wherein:
i) the macropores have an average size d_{A} from 1 µm to 100 µm, and have walls having a thickness from 0.5 to 40 µm, and
ii) the micropores have an average size dᵢ from 0.7 to 1.5 nm, and **in that** said material is free of mesoporous lattice.

13. The material according to claim 12, **characterized in that** its specific surface area is from 400 to 900 m²/g.

14. The material according to claims 12 or 13, **characterized in that** it has an amorphous structure and is not electrically conducting.

15. The material according to claims 12 or 13, **characterized in that** it has a semi-graphitized structure and is electrically semiconducting.

16. The material according to claim 15, **characterized in that** the conductivity of the said material varies from 2 to 20 S. cm⁻¹.

17. The use of a material as defined in any of claims 12 to 16, for manufacturing hydrogen storage devices, supercapacitors, electrodes; for producing chemical reactions catalyzed in a heterogeneous phase or for manufacturing enzymatic sensors or biocells.
